# EUROPÄISCHE PATENTSCHRIFT

(11) **EP 0 556 368 B1**
(45) Veröffentlichungstag und Bekanntmachung des Hinweises auf die Patenterteilung: **02.05.1997**
(21) Anmeldenummer: 92918641.9
(22) Anmeldetag: 26.08.1992
(51) Int. Cl.: B01J 8/12, B01D 53/08

(54) **SCHÜTTGUTREAKTOR**
BULK-MATERIAL REACTOR
REACTEUR POUR MATERIAU EN VRAC

(30) Priorität: 03.09.1991 DE 4129167
(43) Veröffentlichungstag der Anmeldung: 25.08.1993
(73) Patentinhaber: NYMIC ANSTALT, FL-9494 Schaan (LI)
(72) Erfinder: RITTER, Jürgen, D-7000 Stuttgart 75 (DE)
(74) Vertreter: Lins, Edgar, Dipl.-Phys. Dr.jur.
(86) Internationale Anmeldenummer: DE9200719
(87) Internationale Veröffentlichungsnummer: WO9304773

(56) Entgegenhaltungen:
- WO-A-91/02586
- DE-U- 8 401 358
- US-A- 4 468 868

## Beschreibung

Die Erfindung betrifft einen Schüttgutreaktor mit einem in einem Reaktorgehäuse angeordneten, aus dem Schüttgut aufgebauten Wanderbett mit einer Eintragvorrichtung auf der Oberseite und einer Austragvorrichtung auf der Unterseite des Wanderbetts sowie mit einer Gaszuführung und einer Gasabführung auf verschiedenen Seiten des Wanderbetts, wobei das Wanderbett unter Ausbildung eines Schüttwinkels um ein Mittelstück herum ausgebildet ist, an dessen Boden sich als Austragvorrichtung kaskadenförmig gestaffelt angeordnete Austragplatten anschließen, durch die das Wanderbett auf seiner Unterseite begrenzt ist und zwischen denen das Schüttgut einen Schüttwinkel bildet, durch den das Durchrieseln von Schüttgut im Ruhezustand verhindert wird, wobei die Austragplatten hin- und her bewegbar sind, so daß durch die Bewegung der Austragplatten Schüttgut von ihnen herunterfällt.

Ein derartiger Schüttgutreaktor ist durch DE-A-39 40 412 bzw. WO-A-9102586 bekannt. Ein durch eine mittige Eintragvorrichtung und das Mittelstück wird eine symmetrische Ausbildung des Wanderbettes beidseitig des Mittelstücks erreicht, wobei das Wanderbett an seiner Oberseite einen Schüttwinkel ausbildet. Die Austragvorrichtung besteht aus gestaffelt angeordneten Austragplatten, zwischen denen das Schüttgut jeweils einen stabilen Schüttwinkel ausbildet. Das Austragen des Schüttgutes geschieht durch eine Schwingbewegung der Austragplatten, die zu einer Änderung des Schüttwinkels und damit zu einem Herabrieseln des Schüttgutes führt. Die Schüttwinkelflächen zwischen den Austragplatten bilden gleichzeitig die Einströmfläche für das von der Unterseite in den Reaktor einströmende Gas, das im Gegenstrom durch das Wanderbett läuft. Die Staffelung der Austragplatten ist mit einer Neigung ausgebildet, die dem Schüttwinkel an der Oberseite des Wanderbettes entspricht, um eine möglichst gleiche Schüttguthöhe für alle Einströmflächen des Gases zu gewährleisten.

Zur Erzielung gleicher Gaswege können Zwischenwände in dem Wanderbett vorgesehen sein, die parallel zu den Seitenwänden verlaufen, wobei für jede Austragplatte eine Zwischenwand vorgesehen ist.

Die gestaffelt angeordneten Austragplatten schließen sich so an den Boden des Mittelstücks an, daß auch oberhalb der obersten Austragplatten jeweils ein Schüttwinkel ausgebildet ist.

Die Gaszuführung geschieht bei dem bekannten Schüttgutreaktor über einen Gasraum, der unterhalb einer im Boden des Gehäuses befindlichen Gaseintrittsöffnung angeordnet ist. Für eine Kombination mehrerer solcher Reaktoren können gemeinsame Gaszuführungen unterhalb der Reaktormodule vorgesehen sein, um die Reaktormodule Seitenwand an Seitenwand miteinander kombinieren zu können. Durch die gemeinsame Gaszuführung unterhalb der Reaktorgehäuse werden allerdings nicht unerhebliche konstruktive Probleme bei der Zusammenstellung mehrerer Schüttgutreaktoren zu einer Reaktoreinheit, die beispielsweise parallel von einem Gasstrom durchflossen wird, hervorgerufen.

Durch US-A-4,468,868 ist ein Gegenstrom-Schüttgutreaktor bekannt, bei dem eine Gaszuführung nicht von der Unterseite des Wanderbettes, sondern in dem Wanderbett selbst erfolgt. Hierzu kann die Gaszuführung aus dem oberen oder mittleren Bereich des Schüttgutreaktors über eine mittig in dem Schüttgut vertikal nach unten gerichtete Leitung erfolgen, die sich nach unten hin konisch erweitert. Die erweiterte Öffnung endet in dem Schüttgut, so daß Schüttgut, das sich im unteren, sich konisch zu einer Auslaßöffnung verjüngenden Bereich des Reaktors befindet, nicht mehr vom strömenden Gas erfaßt wird. Die Ableitung des Gases aus dem Reaktor erfolgt an den Anschlüssen der Gaszuführung, also ebenfalls noch in dem Schüttgut des Wanderbetts.

Eine ähnliche Anordnung ist durch DE-U-84 01 358 bekannt. In einem zylindrischen Vorratsraum befindet sich ein im Querschnitt rautenförmiges Mittelstück, durch das eine Rohrleitung geführt ist. Die Rohrleitung endet an der unteren Spitze des rautenförmigen Mittelstücks und ist dort mit siebförmigen Wandungen abgeschlossen, so daß an dieser Stelle ein zugeführtes Strömungsmedium in einen ringförmigen Kanal austreten kann. Der ringförmige Kanal verläuft mit konstanter Kanalbreite mit einem sich stetig vergrößernden Durchmesser. Das Gas tritt an der Stelle des größten Durchmessers außerhalb des Durchmessers des Vorratsbehälters aus. Unterhalb des Gasaustritts aus der Rohrleitung befindet sich ein Auslaßteil für das Schüttgut mit einer Zellenradschleuse. Das im Auslaßteil befindliche Schüttgut wird von dem Strömungsmedium ebensowenig durchströmt wie das Schüttgut im Vorratsbehälter.

Der Erfindung liegt die Aufgabe zugrunde, bei einem Schüttgutreaktor der eingangs erwähnten Art mit einer konstruktiv einfachen Gasführung eine gleichmäßige Durchströmung des Schüttgutes mit einer möglichst gleichmäßigen Verweilzeit des Gases in dem Wanderbett zu ermöglichen.

Diese Aufgabe wird bei einem Schüttgutreaktor der eingangs erwähnten Art erfindungsgemäß dadurch gelöst, daß das Innere des Mittelstücks die Gaszuführung bildet und daß das Mittelstück in seinem Boden eine Austrittsöffnung aufweist, an die ein nach unten gerichtetes Verteilerrohr angeschlossen ist, das sich wenigstens bis in den Bereich der unteren Austragplatten erstreckt.

Erfindungsgemäß wird das Innere des Mittelstücks in dem Schüttgutreaktor für die Gaszuführung ausgenutzt, wobei die Gaszuführung für den Gegenstromreaktor unterhalb des Wanderbetts erfolgt, das Gas also aus dem Mittelstück heraus in den freien Raum zwischen den Austragplatten geleitet wird, so daß das Gas nicht direkt über eine sehr kleine Einströmfläche in das Schüttgut geleitet wird, sondern über die durch die Schüttwinkel des Schüttgutes auf den Austragplatten sehr große Einströmfläche. Diese im Normalfall 50 % des Leerquerschnitts des Reaktors betragende Einströmfläche kann auch dadurch vergrößert werden, daß die Staffelung der Austragplatten mit einer Neigung ausgebildet ist, die zwischen 5° und 15° größer ist als der an der Oberseite des Wanderbetts ausgebildete Schüttwinkel. So läßt sich bei einer bevorzugten größeren Neigung der Staffelung um etwa 11° eine Einströmfläche von 76 % des Leerquerschnitts des Reaktors erzielen. Diese Ausbildung erlaubt einen sehr hohen Volumendurchsatz von Gas durch das Wanderbett, da in den Einströmflächen eine nur geringfügige Beschleunigung der Gasströme eintritt und so mit relativ hohen Gasgeschwindigkeiten gearbeitet werden kann, ohne daß ein unerwünschter Fluidisierungseffekt mit dem Schüttgut an den Einströmflächen einsetzt.

Das nach unten gerichtete Verteilerrohr sorgt dafür, daß das Gas zunächst bis weit nach unten im Reaktorgehäuse geleitet wird und dann umgelenkt wieder nach oben steigt, um im Gegenstrom durch das Wanderbett zu fließen. Hierfür ist es zweckmäßig, wenn sich das Verteilerrohr vom freien Ende hin konisch etwas erweitert und wenn insbesondere vor der Mündung des Verteilerrohrs ein Umlenkkegel angeordnet ist. Hierdurch wird eine möglichst große Gleichmäßigkeit der Gasverteilung auf beiden Seiten des Mittelstücks bewirkt. Mit der Neigung der Wände des Verteilerrohres läßt sich die Größe der Öffnung einstellen, durch die das Gas die Gaszuführung verläßt. Die Größe der Öffnung ist umgekehrt proportional zur Geschwindigkeit des Gases, so daß mit der Wahl der Neigung des Verteilerrohres und der Breite des Gasaustrittspaltes - und damit der Breite der Mündungsöffnung des Verteilerrohres - die Strömungsgeschwindigkeit des Gases einstellbar ist, wodurch die Wirkung des Verteilerrohres als Diffusor sichergestellt werden kann.

Für realistische Breiten der Wanderbetten ist es zweckmäßig, wenn in der seitlichen Erstreckung des Wanderbetts wenigstens eine Zwischenwand angeordnet ist, zu deren beiden Seiten Teilwanderbetten mit jeweils einem eigenen Schüttwinkel ausgebildet sind. Diese Zwischenwände haben die Funktion, bei größeren Wanderbetthöhen etwaige Wegunterschiede zwischen möglichen Gasströmrichtungen zu begrenzen, so daß eine möglichst gleichmäßige Verweilzeit des Gases in dem Wanderbett entsteht, wodurch beispielsweise bei Adsorptionsreaktoren eine gleichmäßige Reinigung des Gases durch die Adsorptionswirkung von beispielsweise Filteraktivkoks erzielt wird. Zur Vermeidung der Ausbildung stark unterschiedlicher Höhen der Teil-Wanderbetten bei einer den Schüttwinkel übersteigenden Neigung der Staffelung der Austragplatten ist es zweckmäßig, für ein radial auswärts einer Zwischenwand liegendes Teil-Wanderbett einen Füllstandsmesser in der Sollhöhe vorzusehen. Dadurch wird eine unterschiedliche Weglänge für das durchströmende Gas - bedingt durch die den Schüttwinkel übersteigende Neigung der Staffelung der Austragplatten - auf die radiale Tiefe des Teil-Wanderbetts beschränkt.

Die erfindungsgemäße Ausbildung des Schüttgutreaktors hat den Vorteil, daß Anschlüsse für die Gaszuführung und die Gasabführung in derselben Seitenwand des Gehäuses angeordnet sein können. Bei einer bevorzugten rechteckigen, länglichen Ausbildung des Gehäuses, das beispielsweise etwa 6 m lang und etwa 3 m breit sein kann, befinden sich die Anschlüsse vorzugsweise in einer kleinen Stirnwand, so daß mehrere Schüttgutreaktoren mit ihren großen Seitenwänden aneinandergereiht werden können und an eine gemeinsame Gaszuführungsleitung, die an den Stirnwänden geführt ist, angeschlossen werden kann. Diese Anordnung hat ferner den Vorteil, daß beim Ausfall eines Reaktors dieser ohne Schwierigkeiten und ohne Beeinträchtigung der Funktion der anderen Reaktoren in der Reaktoranordnung von den Gasleitungen abgeklemmt und repariert werden kann, während die anderen Schüttgutreaktoren weiterarbeiten können.

Bei der erwähnten länglichen, rechteckigen Ausbildung des Schüttgutreaktors ist es zweckmäßig, wenn ein Antrieb für die Bewegung der Austragplatten auf der den Gasanschlüssen gegenüberliegenden Seite des Gehäuses angeordnet ist. Bei der beispielhaft erwähnten Länge des Gehäuses von 6 m kann es zweckmäßig sein, die Austragplatten nicht einstückig über die gesamte Länge auszubilden, sondern jeweils zwei hintereinander ausgebildete Austragplatten vorzusehen, da diese dann antriebstechnisch besser beherrschbar sind. In diesem Fall läge der zweite Antrieb für die antriebsmäßig miteinander verbundenen Austragplatten auf der gegenüberliegenden Seite, also auf der Seite der Gasanschlüsse. Der Antrieb für die Austragplatten kann gleichzeitig zum Antrieb von ebenfalls schwingenden Abführrinnen und ggf. einer schwingenden Verteilerplatte in der Zuführungseinrichtung ausgenutzt werden.

Eine bevorzugte Ausführungsform des erfindungsgemäßen Schüttgutreaktors sieht vor, daß in dem Gehäuse des Reaktors zwei Wanderbetten mit Gas führenden Mittelstücken nebeneinander ausgebildet sind, die durch eine sich bis zur Oberkante der Wanderbetten erstreckende Zwischenwand voneinander getrennt sind und einen gemeinsamen Gassammelraum aufweisen, der mit einer gemeinsamen Gasabführung in Verbindung steht. Diese Ausführungsform ermöglicht die geschilderten Vorteile von länglichen, relativ schmalen Wanderbetten, wobei durch die Anordnung der beiden Wanderbetten nebeneinander in einem Gehäuse ein größerer und gleichmäßigerer Durchsatz erzielt wird als bei der Ausbildung eines entsprechend breiteren Wanderbettes. Für eine beispielhafte Länge des Schüttgutreaktors von 6 m ergibt sich durch die Ausbildung von zwei Wanderbetten nebeneinander und jeweils zwei Austragplatten hintereinander eine Anordnung von vier Austragvorrichtungen, die zusammen mit dem Mittelstück als Modul ausgebildet sein können. Das Modul hat dann eine Querschnittsgröße von ca. 3 m x 3 m, wodurch sich ein gut fertigbares und handhabbares Format ergibt, das insbesondere eine zu breite und schwieriger handhabbare Ausbildung des Wanderbettes vermeidet.

Die Erfindung wird im folgenden anhand von in der Zeichnung dargestellten Ausführungsbeispielen näher erläutert. Es zeigen:
- Figur 1 -: einen Vertikalschnitt durch einen erfindungsgemäßen Schüttgutreaktor
- Figur 2 -: einen Schüttgutreaktor mit zwei Wanderbetten
- Figur 3 -: eine Reaktoranordnung mit zwei nebeneinander angeordneten Reaktoren gemaß Figur 2
- Figur 4 -: eine Reaktoranordnung mit drei übereinander angeordneten Reaktoren gemäß Figur 2.

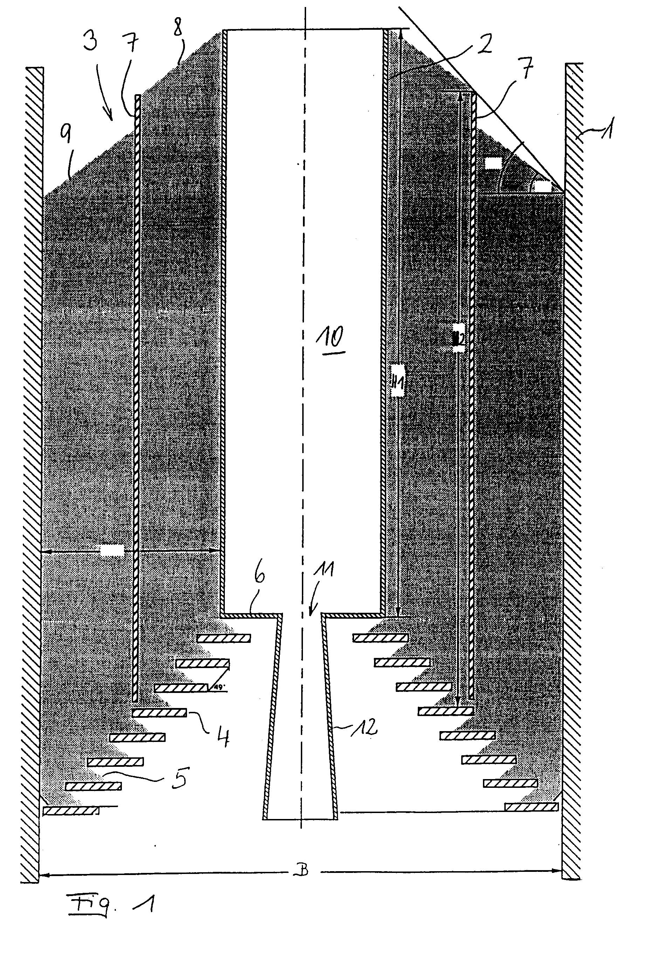

Figur 1 zeigt einen Vertikalschnitt parallel zu den kurzen Seiten eines rechteckigen Gehäuses 1, eines Schüttgutreaktors und läßt ein hohles, sich über die gesamte Längserstreckung des Gehäuses 1 ausgedehntes Mittelstück 2 erkennen, zu dessen beiden Seiten sich ein Wanderbett 3 ausgebildet hat. Das Wanderbett 3 ist an seiner Unterseite durch eine durch Auftragplatten 4 gebildete Austragvorrichtung begrenzt, wobei die Austragplatten gestaffelt und einander überlappend übereinander angeordnet sind und sich von Mittelstück 2 zur Seitenwand des Gehäuses 3 nach unten hin erstrecken. In den Zwischenräumen zwischen den Austragplatten 4 bildet das Schüttgut des Wanderbetts 3 Schüttwinkel 5 aus, die im unbewegten Zustand der Austragplatten 4 ein Durchrieseln des Schüttguts des Wanderbetts 3 durch die Austragvorrichtung verhindern. Durch eine schwingende Hin- und Herbewegung der Austragplatten 4 wird der Schüttwinkel so verändert, daß das Schüttgut, abhängig von der Amplitude der Hin- und Herbewegung, durch die Austragplatten 4 kontrolliert austragbar ist. Die obersten Austragplatten 4 sind überlappend unter einem Boden 6 des Mittelstücks 2 angeordnet, so daß sich auch oberhalb der obersten Austragplatte 4 ein Schüttwinkel 5 ausbildet.

Die auf beiden Seiten des Mittelstücks 2 ausgebildeten Teile des Wanderbetts 3 sind durch jeweils eine Zwischenwand 7 in zwei Teil-Wanderbetten 8,9 unterteilt, die an ihren Oberseiten jeweils einen eigenen Schüttwinkel ausbilden, der für das Schüttgut Aktivkoks beispielsweise 38° beträgt. Die Neigung der Staffelung der Austragplatten 4 ist in dem dargestellten Ausführungsbeispiel mit 49° gewählt. Dieser Winkel von 49° bildet sich bei einer richtigen Befüllung der Teil-Wanderbetten 8,9 auch zwischen der Schüttguthöhe an den Seitenwänden und der Oberseite der Zwischenwand 7 aus, wie dies in der Zeichnung angedeutet ist. Der größere Neigungswinkel für die Staffelung der Austragplatten 4 gegenüber dem Schüttwinkel bewirkt, daß die durch die Schüttwinkel 5 zwischen den Austragplatten 4 gebildeten Einströmflächen eine Gesamtfläche bilden, die wesentlich größer ist als bei einer Anordnung der Austragplatten 4 mit einem dem Schüttwinkel von 38° entsprechenden Winkel. Während im letzteren Falle eine Einströmfläche von ca. 50 % des Leerquerschnitts des Reaktors erreichbar sind, wird in dem dargestellten Ausführungsbeispiel bei einer Neigung der Staffelung von 49 % eine Einströmfläche von 76 % der Leer-Querschnittsfläche des Reaktors erzielt. Wie Figur 1 erkennen läßt, reicht die innere Füllhöhe des äußeren Teil-Wanderbetts 9 nicht bis zur Höhe der Zwischenwand 7. Die weitere Befüllung wird durch einen (nicht dargestellten) an der Außenwand des Teil-Wanderbetts 9 angeordneten Füllstandsmesser beendet, um dadurch eine unterschiedliche Durchstömungslänge des Gases aufgrund der gegenüber dem Schüttgutwinkel größeren Neigung der Staffelung der Austragplatten 4 auf die Teil-Wanderbetten 8, 9 zu beschränken, so daß ein größerer Längenunterschied über die gesamte radiale Tiefe des Wanderbetts 6 vermieden wird.

Der erfindungsgemäße Reaktor wird als Gegenstromreaktor betrieben. Erfindungsgemäß wird der Innenraum des Mittelstücks 2 als Gaszuführung 10 ausgenutzt. Dadurch ist es möglich, das Gas über einen Gaseintrittsanschluß in einer kleinen Stirnseite des Reaktorgehäuses 1 eintreten zu lassen. Das Gas verteilt sich über die Tiefe des Gehäuses 1 gleichmäßig dadurch, daß es durch einen Austritt 11 im Boden 6 des Mittelstücks 2 austritt und so in den Bereich zwischen den Austragplatten 4 und deren Schüttwinkel 5 gerät. Die möglichst gleichmäßige Verteilung des zugeführten Gases wird dadurch unterstützt, daß an den Auslaß 11 im Boden 6 des Mittelstücks 2 ein Verteilerrohr 12 angeschlossen ist, das sich mit seinem unteren Ende bis auf die Höhe der unteren Austragplatten 4 erstreckt und sich zu seinem freien Ende hin konisch erweitert.

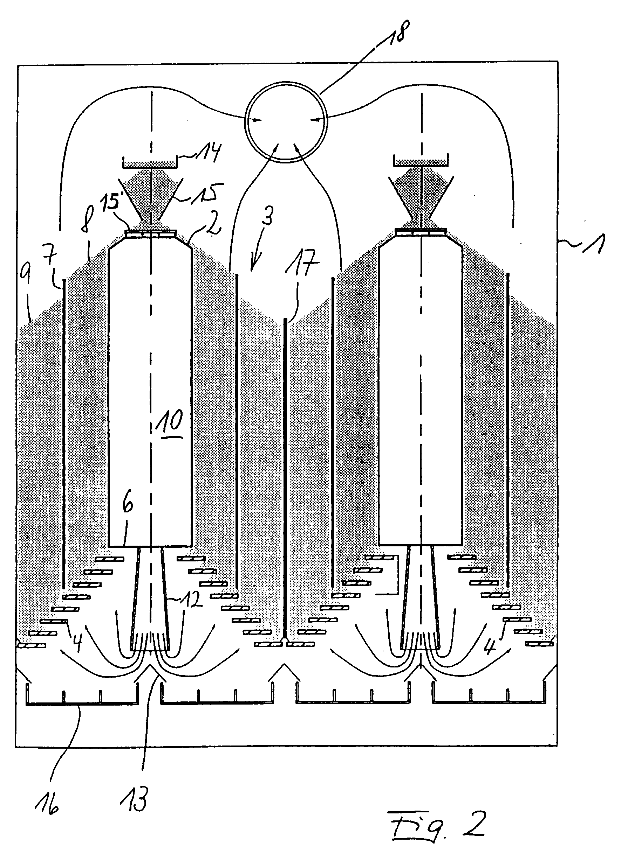

Wie Figur 2 erkennen läßt, wird das aus dem Verteilerrohr 12 nach unten austretende Gas nach oben umgelenkt, was durch einen von dem aus dem Verteilerrohr 12 austretenden Gas angeströmte Umlenkkegel 13 unterstützt wird.

Figur 2 läßt erkennen, daß jedes Wanderbett 3 eine Schüttgutzuführung aufweist, die aus einer schwingenden Zuführrinne 14, einem darunter mittig angeordneten Zuführtrichter 15 sowie einer darunter angeordneten schwingenden Verteilerplatte 15' besteht. Die Verteilerplatte 15', auf der sich Schüttgutwinkel ausbilden, ist schwingend antreibbar, so daß eine dosierte Schüttgutauffüllung des Wanderbetts 3 möglich ist.

Das durch die Austragplatten 4 ausgetragene Schüttgut fällt in Abführrinnen 16, die ebenfalls schwingend angetrieben sein können.

Figur 2 zeigt ein Reaktorgehäuse 1, in dem zwei Wanderbetten 3 mit jeweils einer eigenen Schüttgutzuführung 14,15, einem eigenen Mittelstück 2 und eigenen Austragplatten 4 ausgebildet ist. Die beiden Wanderbetten 3 sind durch eine sich bis zur Oberseite der Wanderbetten erstreckende Trennwand 17 voneinander getrennt. Für beide Wanderbetten 3 findet eine separate Rohgaszuführung 10 durch die beiden Mittelstücke 2 statt.

Die Räume oberhalb der Wanderbetten sind miteinander verbunden und mit einer gemeinsamen Reingasabführung 18 versehen. Vorzugsweise mündet die Reingasabführung in einen Abgasanschluß, der sich auf derselben kleinen Stirnseite des Gehäuses 1 befindet wie die Rohgas-Zuführungsanschlüsse.

Der Antrieb für die schwingenden Austragplatten 4, die Zuführrinne 14, die Verteilerplatte 15' und die Abführrinnen 16 ist vorzugsweise auf der gegenüberliegenden Stirnseite angeordnet.

Die Gesamtbreite B (Figur 1) eines Wanderbetts beträgt etwa 1,3 m, so daß sich eine gesamte Breite des Reaktors in Figur 2 von ca. 2,6 m ergibt. Eine bevorzugte Tiefe des Reaktors beträgt 6 m.

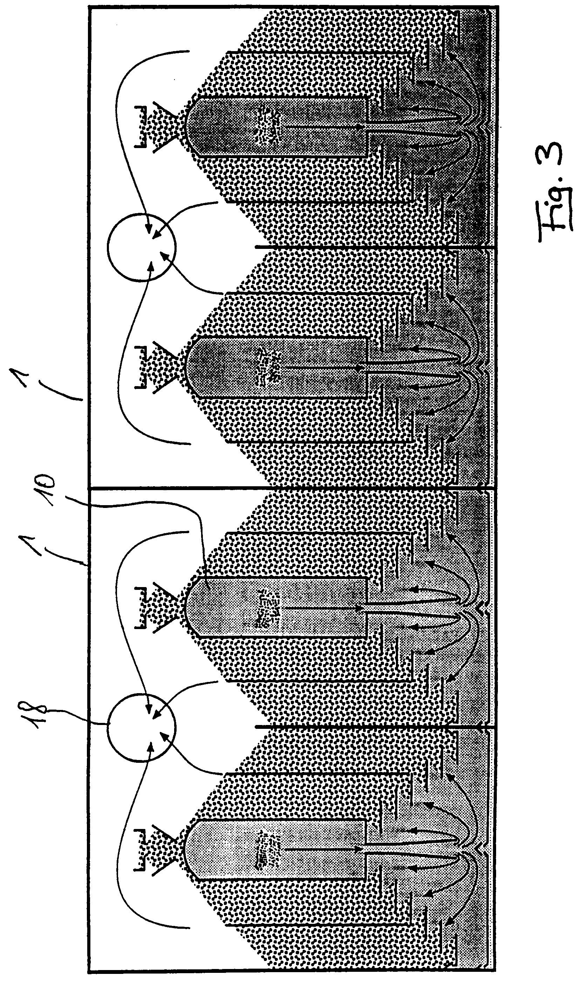

Figur 3 verdeutlicht, daß zwei Reaktoren, wie sie in Figur 2 dargestellt sind, ohne Zwischenräume und ohne Probleme nebeneinander angeordnet werden können, da sich die Gasanschlüsse an den hinteren Stirnseiten befinden und unproblematisch miteinander verbunden werden können, um eine Gesamtanordnung mehrerer Reaktorgehäuse 1 zur Erhöhung der zu bearbeitenden Gasdurchflußmenge zu erstellen.

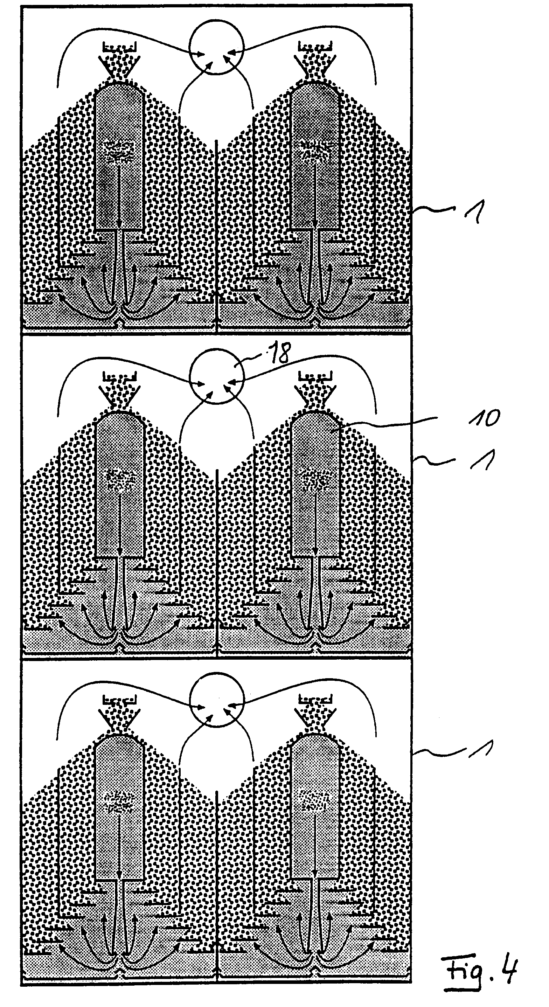

Figur 4 verdeutlicht, daß in gleicher Weise die Anordnung mehrer Reaktorgehäuse übereinander möglich ist. Selbstverständlich ist es ferner möglich, Reaktorgehäuse sowohl nebeneinander als auch übereinander anzuordnen, um so außerordentlich leistungsfähige Reaktoranordnungen zu schaffen.

## Patentansprüche

1. Schüttgutreaktor mit einem in einem Reaktorgehäuse (1) angeordneten, aus dem Schüttgut aufgebauten Wanderbett (3) mit einer Eintragvorrichtung (14,15) auf der Oberseite und einer Austragvorrichtung (4) auf der Unterseite des Wanderbetts (3) sowie mit einer Gaszuführung (10) und einer Gasabführung (18) auf verschiedenen Seiten des Wanderbetts (3), wobei das Wanderbett (3) unter Ausbildung eines Schüttwinkels um ein Mittelstück (2) herum ausgebildet ist, an dessen Boden sich als Austragvorrichtung kaskadenförmig gestaffelt angeordnete Austragplatten (4) anschließen, durch die das Wanderbett (3) auf seiner Unterseite begrenzt ist und zwischen denen das Schüttgut einen Schüttwinkel (5) bildet, durch den das Durchrieseln von Schüttgut im Ruhezustand verhindert wird, wobei die Austragplatten (4) hin- und her bewegbar sind, so daß durch die Bewegung der Austragplatten (4) Schüttgut von ihnen herunterfällt, **dadurch gekennzeichnet, daß** das Innere des Mittelstücks (2) die Gaszuführung (10) bildet und daß das Mittelstück (2) in seinem Boden (6) eine Austrittsöffnung (11) aufweist, an die ein nach unten gerichtetes Verteilerrohr (12) angeschlossen ist, das sich wenigstens bis in den Bereich der unteren Austragplatten (4) erstreckt.

2. Schüttgutreaktor nach Anspruch 1, dadurch gekennzeichnet, daß sich das Mittelstück (2) über die gesamte Tiefe des Gehäuses (1) erstreckt.

3. Schüttgutreaktor nach Anspruch 1 oder 2, dadurch gekennzeichnet, daß sich das Verteilerrohr (12) zum unteren Ende hin konisch erweitert.

4. Schüttgutreaktor nach einem der Ansprüche 1 bis 3, dadurch gekennzeichnet, daß vor der Mündung des Verteilerrohrs (12) ein Umlenkkegel (13) angeordnet ist.

5. Schüttgutreaktor nach einem der Ansprüche 1 bis 4, dadurch gekennzeichnet, daß die Staffelung der Austragplatten (4) mit einer Neigung ausgebildet ist, die zwischen 5° und 15° größer ist als der an der Oberseite des Wanderbetts (3) ausgebildete Schüttwinkel.

6. Schüttgutreaktor nach Anspruch 5, dadurch gekennzeichnet, daß die Neigung der Staffelung der Austragplatten (4) zwischen 10° und 12° größer ist als der an der Oberseite des Wanderbetts (3) ausgebildete Schüttwinkel.

7. Schüttgutreaktor nach einem der Ansprüche 1 bis 6, dadurch gekennzeichnet, daß in der seitlichen Erstreckung des Wanderbetts (3) wenigstens eine Zwischenwand (7) angeordnet ist, zu deren beiden Seiten Teil-Wanderbetten (8,9) mit jeweils einem eigenen Schüttwinkel ausgebildet sind.

8. Schüttgutreaktor nach einem der Ansprüche 1 bis 7, dadurch gekennzeichnet, daß Anschlüsse für die Gaszuführung (10) und die Gasabführung (18) in derselben Seitenwand des Gehäuses (1) angeordnet sind.

9. Schüttgutreaktor nach Anspruch 8, dadurch gekennzeichnet, daß ein Antrieb für die Bewegung der Austragplatten (4) auf der den Gasanschlüssen gegenüberliegenden Seite des Gehäuses (1) angeordnet ist.

10. Schüttgutreaktor nach einem der Ansprüche 1 bis 9, dadurch gekennzeichnet, daß in einem Gehäuse (1) zwei Wanderbetten (3) mit Gas führenden Mittelstücken (2) nebeneinander ausgebildet sind, die durch eine sich bis zur Oberkante der Wanderbetten (3) erstreckende Trennwand voneinander getrennt sind und einen gemeinsamen Gassammel-raum aufweisen, der mit einer gemeinsamen Gasabführung (18) in Verbindung steht.

11. Schüttgutreaktor nach einem der Ansprüche 7 bis 10, dadurch gekennzeichnet, daß für ein radial auswärts einer Zwischenwand (7) angeordnetes Teil-Wanderbett (9) ein Füllstandsmesser in einer Soll-Füllhöhe angeordnet ist.

## Claims

1. Bulk-material reactor having a moving bed (3) disposed in a reactor housing (1) and composed of the bulk material, having a charging device (14, 15) at the top and a discharge device (4) at the underside of the moving bed (3) as well as having a gas inlet (10) and a gas outlet (18) on different sides of the moving bed (3), the moving bed (3) while simultaneously defining an angle of repose being formed around a middle piece (2), to the base of which is connected as a discharge device a graduated cascade arrangement of discharge plates (4), by means of which the moving bed (3) is delimited at its underside and between which the bulk material forms an angle of repose (5), by means of which bulk material is prevented from trickling through in the state of rest, the discharge plates (4) being reciprocable so that the motion of the discharge plates (4) causes bulk material to drop from said plates, characterized in that the interior of the middle piece (2) forms the gas inlet (10) and that the middle piece (2) in its base (6) has an outlet opening (11), to which is connected a downwardly directed distributing pipe (12) which extends at least as far as into the region of the bottom discharge plates (4).

2. Bulk-material reactor according to claim 1, characterized in that the middle piece (2) extends over the entire depth of the housing (1).

3. Bulk-material reactor according to claim 1 or 2, characterized in that the distributing pipe (12) widens conically towards its bottom end.

4. Bulk-material reactor according to one of claims 1 to 3, characterized in that a deflection cone (13) is disposed in front of the mouth of the distributing pipe (12).

5. Bulk-material reactor according to one of claims 1 to 4, characterized in that the graduation of the discharge plates (4) is effected at an inclination which is between 5° and 15° greater than the angle of repose formed at the top of the moving bed (3).

6. Bulk-material reactor according to claim 5, characterized in that the inclination of the graduation of the discharge plates (4) is between 10° and 12° greater than the angle of repose formed at the top of the moving bed (3).

7. Bulk-material reactor according to one of claims 1 to 6, characterized in that disposed in the lateral extension of the moving bed (3) is at least one partition wail (7), on either side of which partial moving beds (8, 9) each with a separate angle of repose are formed.

8. Bulk-material reactor according to one of claims 1 to 7, characterized in that connections for the gas inlet (10) and the gas outlet (18) are disposed in the same side wall of the housing (1).

9. Bulk-material reactor according to claim 8, characterized in that a drive for moving the discharge plates (4) is disposed at the opposite side of the housing (1) to the gas connections.

10. Bulk-material reactor according to one of claims 1 to 9, characterized in that formed alongside one another in a housing (1) are two moving beds (3) with gas-carrying middle pieces (2), which are separated from one another by a partition wall extending up to the top edge of the moving beds (3) and have a common gas-collecting chamber, which is connected to a common gas outlet (18).

11. Bulk-material reactor according to one of claims 7 to 10, characterized in that, for a partial moving bed (9) disposed radially outwards of a partition wall (7), a filling level meter is disposed at a desired filling level.

## Revendications

1. Réacteur à matériau en vrac, comprenant un lit fluidisé (3) disposé dans un boîtier (1) du réacteur, constitué par le matériau en vrac, avec un dispositif introducteur (14, 15) du côté supérieur et un dispositif extracteur (4) du côté inférieur du lit fluidisé (3), et comportant une adduction de gaz (10) et une évacuation de gaz (18) sur des côtés différents du lit fluidisé (3), lequel est formé avec un angle de talus autour d'une pièce centrale (2) au fond de laquelle se raccordent, en tant que dispositif extracteur, des plateaux d'extraction (4) étagés en cascade, par lesquels le lit fluidisé (3) est limité du côté inférieur et entre lesquels le matériau en vrac forme un angle de talus (5) qui à l'état de repos empêche la traversée du matériau en vrac par ruissellement, les plateaux d'extraction (4) étant mobiles en va-et-vient de façon que, par le mouvement des plateaux d'extraction (4), du matériau en vrac tombe de ceux-ci, caractérisé en ce que l'intérieur de la pièce centrale (2) constitue l'adduction de gaz (10) et en ce que la pièce centrale (2) présente en son fond (6) une ouverture de sortie (11) à laquelle est raccordé un tube répartiteur (12) dirigé vers le bas, qui s'étend au moins jusque dans la zone des plateaux d'extraction inférieurs (4).

2. Réacteur à matériau en vrac selon la revendication 1, caractérisé en ce que la pièce centrale (2) s'étend sur toute la profondeur du boîtier (1).

3. Réacteur à matériau en vrac selon la revendication 1 ou 2, caractérisé en ce que le tube répartiteur (12) s'élargit en cône vers son extrémité inférieure.

4. Réacteur à matériau en vrac selon une des revendication 1 à 3, caractérisé en ce qu'un cône déflecteur (13) est disposé face au débouché du tube répartiteur (12).

5. Réacteur à matériau en vrac selon l'une des revendications 1 à 4, caractérisé en ce que l'étagement des plateaux d'extraction (4) est réalisé avec une pente qui est de 5 à 15 degrés supérieure à l'angle de talus formé du côté supérieur du lit fluidisé (3).

6. réacteur à matériau en vrac selon la revendication 5, caractérisé en ce que la pente de l'étagement des plateaux d'extraction (4) est de 10 à 12 degrés supérieure à l'angle de talus formé du côté supérieur du lit fluidisé (3).

7. Réacteur à matériau en vrac selon l'une des revendications 1 à 6, caractérisé en ce qu'est disposée dans l'étendue latérale du lit fluidisé (3) au moins une paroi intermédiaire (7), des deux côtés de laquelle sont formés des lits fluidisés partiels (8, 9) ayant chacun leur propre angle de talus.

8. Réacteur à matériau en vrac selon l'une des revendications 1 à 7, caractérisé en ce que des raccordements pour l'adduction de gaz (10) et l'évacuation de gaz (18) sont disposés dans la même paroi latérale du boîtier (1).

9. Réacteur à matériau en vrac selon la revendication 8, caractérisé en ce qu'un entraînement pour le mouvement des plateaux d'extraction (4) est agencé du côté du boîtier (1) qui est opposé aux raccordements de gaz.

10. Réacteur à matériau en vrac selon l'une des revendications 1 à 9, caractérisé en ce que deux lits fluidisés sont réalisés l'un à côté de l'autre dans un boîtier (1), avec des pièces centrales (2) canalisatrices de gaz, ces deux lits étant séparés l'un de l'autre par une cloison s étendant jusqu'au bord supérieur des lits fluidisés (3) et présentant un espace collecteur de gaz commun qui est en liaison avec une évacuation de gaz commune (18).

11. Réacteur à matériau en vrac selon l'une des revendications 7 à 10, caractérisé en ce qu'à un niveau des consigne de remplissage est disposé un dispositif de mesure de niveau de remplissage pour un lit fluidisé partiel (9) disposé radialement à l'extérieur d'une paroi intermédiaire (7).
